# EUROPÄISCHE PATENTSCHRIFT

(11) **EP 1 929 751 B1**
(45) Veröffentlichungstag und Bekanntmachung des Hinweises auf die Patenterteilung: **04.12.2013**
(21) Anmeldenummer: 06792159.3
(22) Anmeldetag: 20.09.2006
(51) Int. Cl.: H04L 29/12, H05B 3/74

(54) **VERFAHREN UND VORRICHTUNG ZUR ZUWEISUNG VON IDENTIFIKATIONSKENNUNGEN AN BUSTEILNEHMER EINES DATENBUSSES SOWIE GERÄT MIT DAFÜR VORGESEHENEN BUSTEILNEHMERN**
METHOD AND APPARATUS FOR ASSIGNING IDENTIFICATION TAGS TO BUS SUBSCRIBERS ON A DATA BUS AND DEVICE HAVING BUS SUBSCRIBERS PROVIDED THEREFOR
PROCEDE ET DISPOSITIF PERMETTANT D'AFFECTER DES CODES D'IDENTIFICATION AUX DISPOSITIFS D'UN BUS DE DONNEES ET APPAREIL DOTE DE DISPOSITIFS DE BUS CORRESPONDANTS

(30) Priorität: 27.09.2005 DE 102005047378
(43) Veröffentlichungstag der Anmeldung: 11.06.2008
(73) Patentinhaber: E.G.O. Elektro-Gerätebau GmbH, 75038 Oberderdingen (DE)
(72) Erfinder: HERWEG, Elmar, 75038 Oberderdingen (DE); BÖHM, Frank, 75056 Sulzfeld (DE); ROTH, Bernhard, 75038 Oberderdingen (DE)
(74) Vertreter: Patentanwälte Ruff, Wilhelm, Beier, Dauster & Partner
(86) Internationale Anmeldenummer: PCT/EP2006/009117
(87) Internationale Veröffentlichungsnummer: WO 2007/036311

(56) Entgegenhaltungen:
- WO-A-2004/064329
- US-A1- 2002 145 394

## Beschreibung

### Anwendungsgebiet und Stand der Technik

Die Erfindung betrifft ein Verfahren zur Vergabe eindeutiger Identifikationskennungen an Busteilnehmer eines Datenbusses, eine Vorrichtung zur Vergabe von Identifikationskennungen an ein Gerät mit einem Datenbus und mit am Datenbus angeschlossenen Busteilnehmern.

Datenbussysteme werden verwendet, um zusammengehörige elektronische Komponenten in die Lage zu versetzen, miteinander zu kommunizieren. Sie finden beispielsweise innerhalb von Geräten Anwendung, so dass einzelne Komponenten der Geräte miteinander oder mit einem Zentralrechner kommunizieren können.

Technisch wird der Aufbau eines Datenbussystems mittels eines signal-übertragenden Verbindungsmittels, beispielsweise mittels eines Daten-buskabels, sowie an diesem Verbindungsmittel an geschlossenen Komponenten, den Busteilnehmern, realisiert. Um den Aufbau des Datenbussystems bezüglich seiner Busteilnehmer zu ändern, können einzelne Busteilnehmer jederzeit zusätzlich an den Datenbus angeschlossen bzw. bestehende Busteilnehmer vom Datenbus abgetrennt werden.

Um bei Daten, die auf den Datenbus geschrieben werden, erkennen zu können, welcher der Busteilnehmer diese Daten geschrieben hat bzw. an welchen Busteilnehmer diese Daten gerichtet sind, werden den Busteilnehmern eindeutige Identifikationskennungen zugewiesen. Dies gestattet eine Bestimmung des Senders und des angesprochenen Empfängers für auf den Datenbus gesendete Daten.

Zur Zuweisung dieser eindeutigen Identifikationskennung gibt es eine Reihe technischer Möglichkeiten: Die einfachste Möglichkeit ist es, vor Inbetriebnahme des Datenbusses an den einzelnen Busteilnehmern selbst deren jeweilige eindeutige Identifikationskennung einzustellen. Dies kann beispielsweise über Steckbrücken oder DIP-Schalter geschehen. Als nachteilig an dieser Lösung wird empfunden, dass die Einstellung einen erheblichen Aufwand bedeutet. Dies gilt umso mehr, wenn an einem Datenbus Busteilnehmer gleichen Typs angeschlossen werden, da dies in aller Regel damit einhergeht, dass die Einstellung der Busteilnehmer erst im Zuge des Einbaus oder nach Einbau der Busteilnehmer in das den Datenbus enthaltende Gerät vollzogen werden kann. Dies stellt jedoch eine unerwünschte Verkomplizierung der Herstellung dar. Alternativ dazu ist es bei der Verwendung mehrerer Busteilnehmer gleichen Typs am Datenbus auch möglich, diese Busteilnehmer schon im Vorfeld vor der Montage mit ihrer jeweiligen eindeutigen Identifikationskennung zu versehen. Dies bedeutet jedoch, dass die eigentlich baugleichen Busteilnehmer in Abhängigkeit der eingestellten eindeutigen Identifikationskennung getrennt vorgehalten und gehandhabt werden müssen, um zu verhindern, dass versehentlich zwei Busteilnehmer gleicher Identifikationskennung an einen Datenbus angeschlossen werden.

Neben der manuellen Vergabe von Identifikationskennungen ist es auch bekannt, die Identifikationskennungen im Datenbus automatisch geben zu lassen. Für den im EDV-Bereich üblichen SCSI-Datenbus ist dies beispielsweise unter dem Namen SCAM (SCSI Configuration Auto-Magically) bekannt. Dieses Verfahren ist jedoch, insbesondere wenn baugleiche Busteilnehmer verwendet werden, nur dann zweckmäßig anzuwenden, wenn es für den Anwendungszweck gleichgültig ist, welcher Busteilnehmer welche Identifikationskennung erhält. Bei solchen Systemen jedoch, bei denen identische Busteilnehmer verbaut werden und im Betrieb gezielt der eine oder der andere der Busteilnehmer ansprechbar sein muss, ist eine solche automatische Vergabe von Identrifikationskennungen nicht ohne nachfolgende Konfigurationsschritte anwendbar.

Die WO 2004/064329 A1 beschreibt ein System sowie ein entsprechendes Verfahren, bei dem mittels genau eines Eingabegerätes mehrere Geräte, die an einem gemeinsamen Netzwerk hängen, und insbesondere Geräte der Unterhaltungselektronik sind, jeweils mit Adressen versehen werden. Dies geschieht drahtlos bzw. das Eingabegerät arbeitet vorzugweise per Funk. Durch Entlanggehen wird mittels des Eingabegerätes jedem der Geräte nacheinander die Adresse zugeordnet. Findet dies in einem Haushalt statt, müssen demzufolge die Standorte sämtlicher an das Netzwerk angehängter Geräte sozusagen abgegangen werden.

Die US 2002/0145394 A1 beschreibt ein System, bei dem mittels genau eines Eingabegerätes mehrere Lichteinheiten, die an einem Netzwerk hängen, programmiert werden können bzw. mit einer Adresse versehen werden können. Auch hier wird ein drahtloses Programmieren bevorzugt.

### Aufgabe und Lösung

Aufgabe der Erfindung ist es, ein Verfahren zur Vergabe eindeutiger Identifikationskennungen zur Verfügung zu stellen, mit dem Busteilnehmern eines Datenbusses jeweils eine individuelle und bestimmte Identifikationskennung schnell und eindeutig zugeordnet werden kann. Aufgabe ist es darüber hinaus, eine Vorrichtung zur Verfügung zu stellen, die zur Durchführung des Verfahrens geeignet ist.

Gelöst wird diese Aufgabe durch ein Verfahren mit den Merkmalen des Anspruchs 1 sowie eine Vorrichtung zur Vergabe von Identifikationskennungen nach Anspruch 12. Vorteilhafte sowie bevorzugte Ausgestaltungen der Erfindung sind Gegenstand der weiteren Ansprüche und werden im Folgenden näher erläutert. Der Wortlaut der Anspruche wird dabei durch ausdrückliche Bezugnahme zum Inhalt der Beschreibung gemacht. Manche der nachfolgend beschriebenen Merkmale werden zwar nur einmal erläutert. Sie gelten jedoch davon unabhängig sowohl für das Verfahren als auch für die Vergabevorrichtung.

Es ist ein Verfahren zur Vergabe eindeutiger Identifikationskennungen an Busteilnehmer eines Datenbusses vorgesehen, wobei ein ortsabhängig drahtlos empfangbares Signal mittels eines Senders ausgestrahlt wird, der Busteilnehmer das Signal empfängt und dem Busteilnehmer in Abhängigkeit des empfangenen Signals seine Identifikationskennung zugewiesen wird.

Ein zur Durchführung des Verfahrens geeigneter Busteilnehmer weist zu diesem Zweck einen Empfänger auf, der zum Empfang drahtlos ausgestrahlter Signale geeignet ist. Dieser Empfänger ist vorzugsweise als Teil eines Buscontrollers ausgeführt oder mit diesem verbunden. Vor Inbetriebnahme des Datenbussystems wird dieser Empfänger genutzt, um dem Busteilnehmer seine Identifikationskennung mitzuteilen, mit der er zur Durchführung seiner bestimmungsgemäßen Aufgaben am Datenverkehr auf dem Datenbus teilnehmen kann. Zur Vergabe der Identifikationskennung wird durch einen Sender, der sowohl als vollständig vom Datenbus getrennter Sender oder auch als fest oder nur zu Konfigurationszwecken kurzzeitig in den Datenbus integrierter Sender ausgebildet sein kann, ein Signal ausgestrahlt. Der Busteilnehmer kann anhand der Signalstärke und anderer signalspezifischer Parameter erkennen, ob das Signal dazu bestimmt ist, ihm die zur Zuweisung einer ldentifikationskennung erforderliche Information zukommen zu lassen. So kann der Busteilnehmer beispielsweise Signale mit einer Signalstärke unter einer bestimmten Grenzsignalstärke ignorieren oder auch solche Signale für die Identifikationskennungsermittlung nicht heranziehen, die einem festgelegten Signalprotokoll nicht folgen. Wenn der Busteilnehmer jedoch ermittelt hat, dass das empfangene Signal zur Ermittlung seiner eigenen Identifikationskennung bestimmt ist, kann er die Signalparameter anhand von vorgegebenen Algorithmen zur Ermittlung seiner vorgegebenen Identifikationskennung nutzen. Es wird als besonders vorteilhaft angesehen, wenn der Busteilnehmer ohne Interaktion mit anderen Busteilnehmern über den Datenbus aus dem empfangenen Signal seine Identifikationskennung herleiten kann. Dies ermöglicht es, dass die Vergabe von Identifikationskennungen schon vor Inbetriebnahme oder sogar vor Einbau des Datenbusses möglich ist. Denkbar und bei manchen Ausführungsformen der Erfindung zweckmäßig kann es jedoch auch sein, dass der Busteilnehmer das empfangene Signal und dessen Parameter, beispielsweise hinsichtlich der Signalstärke, über den Datenbus an andere Busteilnehmer übermittelt. Die eigentliche Identifikationskennung wird durch eine Zentralinstanz am Datenbus festgesetzt, die die Identifikationskennung festlegt und diese an den Busteilnehmer zurücksendet.

Das erfindungsgemäße Verfahren gestattet es, bei einem Gerät oder Geräteverbund mit einem Datenbus, dessen Komponenten als Busteilnehmer des Datenbusses ausgebildet sind, die Vergabe von Identifikationskennungen erst nach Abschluss der Montage der Vorrichtung durchzuführen. Während der Montage muss daher keine Rücksicht darauf genommen werden, dass jeweils identische Komponenten mit verschiedener Identifikationskennung in verschiedener Art und Weise bzw. an verschiedener Position in der Vorrichtung vorzusehen sind. Stattdessen wird erst nach der Montage eine Art Prägung der Busteilnehmer durchgeführt, bei der die Busteilnehmer abhängig von ihrer tatsächlichen Funktion oder Position, für bzw. in der sie verbaut sind, mit jeweils funktions- bzw. positionsspezifischen Identifikationskennungen versehen werden können. Diese Prägung der Busteilnehmer kann einmalig nach der Montage durchgeführt werden oder auch bei jeder neuerlichen Inbetriebnahme der Vorrichtung, beispielsweise und insbesondere durch einen Sender, der als Teil der Vorrichtung ausgebildet ist.

Beim erfindungsgemäßen Verfahren ist die Identifikationskennung in das ausgesendete Signal codiert. Dies stellt bezüglich der Ermittlung der Identifikationskennung durch den Busteilnehmer selbst die einfachste Lösung dar. In diesem Fall sendet der Sender ein Signal, welches unmittelbar dadurch bezüglich seines Inhalts beeinflusst ist, welche Identifikationskennung damit übermittelt werden soll. Um zu erreichen, dass nicht mehrere Busteilnehmer dieses Signal zur Ermittlung ihrer jeweiligen Identifikationskennung verwenden, muss das Signal so ausgestrahlt werden, dass es nur den jeweils zur Ermittlung seiner Identifikationskennung vorgesehenen Busteilnehmer mit relevanter Signalstärke erreicht. Dies kann beispielsweise durch ein Signal mit geringer Reichweite oder gezielter Richtung des Signals oder aber durch gezielte Abschirmung der anderen Busteilnehmer gegenüber dem Sender erfolgen. Das Signal muss nicht unmittelbar die Identifikationskennung enthalten. Stattdessen ist es auch denkbar, dass die Identifikationskennung erst im Zusammenwirken mit im Datenbussystem und insbesondere im Busteilnehmer enthaltenen Informationen festgelegt werden kann. Beispielsweise kann jeder Busteilnehmer eine Zuordnungstabelle aufweisen, in der jeder möglichen Busteilnehmer-Funktion eine Identifikationskennung zugewiesen ist. Wenn der Busteilnehmer dem empfangenen Signal die ihm zugeordnete Funktion entnimmt, kann er im Zusammenwirken mit der Zuordnungstabelle auch seine Identifikationskennung ermitteln.

In einer Weiterbildung des Verfahrens legt der Busteilnehmer nach Ermittlung seiner Identifikationskennung die Identifikationskennung in einem Speicher, insbesondere in einem nichtflüchtigen Speicher, ab. Hierdurch ist es möglich, die Identifikationskennung dauerhaft bzw. zumindest für die Dauer ununterbrochener Stromversorgung im Busteilnehmer zu sichern. Wenn nichtflüchtiger Speicher verwendet wird, kann eine einmal vergebene Identifikationskennung für die Lebenszeit des Busteilnehmers beibehalten werden. Als nichtflüchtiger Speicher ist ein Speicher vorteilhaft, der ohne Stromversorgung seinen Speicherinhalt behält, beispielsweise EPROM, EEPROM oder FLASH-EEPROM. Alternativ dazu ist jedoch auch ein flüchtiger Speicher geeignet, wobei dieser durch eine permanente Stromquelle, beispielsweise eine Sicherungsbatterie, zur Speicherung der Identifikationskennung auch bei ansonsten ausgeschaltetem Gerät bzw. Datenbussystem ausgebildet sein kann.

In einer Weiterbildung der Erfindung nutzt der Busteilnehmer das empfangene Signal nur dann zur Ermittlung seiner Identifikationskennung, wenn die Signalstärke des Signals einen festgesetzten Grenzwert übersteigt. Ein Signal, welches unterhalb dieses Grenzwerts liegt, wird als nicht für den Busteilnehmer vorgesehen interpretiert und daher ignoriert. Besonders vorteilhaft ist es, wenn der Busteilnehmer beispielsweise durch LEDs oder akustische Ausgabemittel zu erkennen gibt, ob er ein Signal als über oder unter dem Grenzwert liegend eingestuft hat.

Bei der Erfindung wird für mehrere Busteilnehmer nacheinander oder gleichzeitig jeweils ein Signal durch mehrere Sender ausgestrahlt. Dabei sind die Busteilnehmer so weit voneinander beabstandet, dass jeder Busteilnehmer jeweils nur das ihm zugeordnete Signal zur Ermittlung seiner Identifikationskennung heranzieht. Die Busteilnehmer werden also so weit voneinander beabstandet, dass ein für einen ersten Busteilnehmer bestimmtes Signal von einem zweiten Busteilnehmer ignoriert wird, da es nicht als ausreichend stark angesehen wird. Die Auswahl des Senders und die Anordnung der Busteilnehmer kann herangezogen werden, um einen Grenzwert festzulegen, unterhalb dessen eine Signalstärke ein Ignorieren des jeweiligen Signals zur Folge hat.

Bei dem erfindungsgemäßen Verfahren wird je Busteilnehmer ein eigener Sender verwendet, wobei die Sender vorzugsweise kongruent zu den Busteilnehmern angeordnet sind. Bei dieser Ausgestaltung des Verfahrens ist jedem Busteilnehmer ein spezifischer Sender zugeordnet, der so ausgebildet, angeordnet und/oder ausgerichtet ist, dass das von ihm abgestrahlte Signal nur von dem jeweils angesprochenen Busteilnehmer zur Ermittlung der busteilnehmerspezifischen Identifikationskennung herangezogen wird. Vorteil bei diesem Verfahren ist es, dass die Vergabe von Identifikationskennungen durch die Busteilnehmer gleichzeitig und dadurch sehr schnell erfolgen kann. Die Sender sind vorzugsweise Teil einer Werkzeugvorrichtung, die bezüglich Formgebung an die Vorrichtung angepasst ist, deren Busteilnehmer mit Identifikationskennungen versehen werden sollen.

In einer Weiterbildung der Erfindung sind die Busteilnehmer während der Vergabe bzw. Ermittlung von Identifikationskennungen mit dem Datenbus verbunden. Es findet zum Zweck der Koordinierung, Überwachung und/oder Plausibilitätsprüfung der Vergabe bzw. Ermittlung eine Datenbuskommunikation statt. Diese Datenbuskommunikation kann beispielsweise darin liegen, dass von einem mit dem Datenbus verbundenen Zentralrechner ein Wecksignal auf den Datenbus gesendet wird, bevor vom Sender zum Zwecke der Identifikationskennungsermittlung ausgestrahlte Signale zu erwarten sind. Dadurch kann erreicht werden, dass durch die Empfänger registrierte Signale ignoriert werden, die keinen Einfluss auf die Identifikationskennung der Busteilnehmer haben dürfen, wie beispielsweise Signale, die zur Vergabe von Identifikationskennungen an einem anderen Datenbus dienen. Die Datenbuskommunikation kann darüber hinaus auch als Fehlererkennung dienen, beispielsweise wenn die Busteilnehmer so ausgebildet sind, dass sie nach Ermittlung ihrer jeweils eigenen Identifikationskennung ein Signal auf den Datenbus senden. Dadurch ist es möglich, zu erkennen, ob in fehlerhafter Art und Weise ein Signal zur Vergabe von Identifikationskennungen von keinem oder von mehr als einem Busteilnehmer zur Ermittlung seiner jeweils eigenen Identifikationskennung genutzt wurde. Zweckmäßig ist darüber hinaus, dass die Busteilnehmer nach Abstrahlen eines Signals durch den Sender einen die empfangene Signalstärke repräsentierenden Kennwert auf den Datenbus senden und die Kennwerte der anderen Busteilnehmer vom Datenbus auslesen. So erkennt das Gerät mit der höchsten Signalstärke, dass es dem Sender am nächsten und damit Adressat des Signals ist.

In einer Weiterbildung der Erfindung werden mehrere Busteilnehmer durch ein gemeinsames Signal zur Ermittlung ihrer Identifikationskennung angeregt. Dabei schicken die Busteilnehmer nach Empfang des gemeinsamen Signals dessen Signalstärke als Kennwert auf den Datenbus und ermitteln anhand des Vergleichs mit den empfangenen Signalstärken der anderen Busteilnehmer ihre Identifikationskennung. Die Busteilnehmer senden also, noch bevor sie eine eigene Identifikationskennung haben, einen anhand der empfangenen Signalstärke gebildeten Wert auf den Datenbus. Dies kann in beliebiger Reihenfolge passieren. Kollisionen von gleichzeitig sendenden Busteilnehmern können dabei mittels üblicher Methoden der Kollisionsverhinderung ausgeschlossen werden. Nachdem alle Busteilnehmer ihre Signalstärke bzw. einen die Signalstärke repräsentierenden Wert auf den Datenbus geschickt haben und somit jeder Busteilnehmer auch die empfangenen Signalstärken der anderen Busteilnehmer kennt, kann jeder Busteilnehmer anhand der relativen Einordnung der von ihm selbst ermittelten Signalstärke seine Entfernung zum Sender relativ zu den anderen Busteilnehmern ermitteln. Dies erlaubt es ihm, seine eigene Identifikationsnummer nach einer fest vorgegebenen und für alle Busteilnehmer identischen Logik festzulegen. Beispielsweise könnte ein Busteilnehmer, der die drittstärkste Signalstärke ermittelt hat, als Identifikationskennung die "3" wählen. Alternativ zu der eigenmächtigen Festlegung der Identifikationskennung in Abhängigkeit der eigenen empfangenen Signalstärke in Relation zu der Signalstärke der durch die anderen Busteilnehmer empfangenen Signalstärken, ist es auch möglich, die Aufgabe der Identifikationskennungsvergabe einem Zentralrechner zuzuweisen. Dieser kommt durch Auslesen der Datenbuskommunikation in Kenntnis aller empfangenen Signalstärken, weist anschließend jeder Signalstärke eine ldentifikationskennung zu und sendet diese Zuweisungen so auf den Datenbus, dass ein jeder Busteilnehmer zu der von ihm ermittelten Signalstärke eine korrespondierende Identifikationskennung erhält.

In einer Weiterbildung der Erfindung senden die Sender elektromagnetische Signale. Hierbei werden vorzugsweise elektromagnetische Signale im Bereich üblicher Funkfrequenzen oder auch im infraroten oder sichtbaren Lichtbereich verwendet. Über passive Empfänger ist es dabei auch möglich, die Identifikationskennungen zu vergeben, ohne dass die Empfänger an eine Stromversorgung angeschlossen sind. Dies erhöht die Flexibilität hinsichtlich der Montagereihenfolge, da noch vor Integration des Datenbusses oder einer Stromversorgung die Prägung der Busteilnehmer durchgeführt werden kann.

In einer anderen Weiterbildung der Erfindung senden die Sender induktive oder kapazitive Signale. Dies ist vor allen Dingen dann vorteilhaft, wenn die Busteilnehmer durch jeweils eigene Signale zur Festlegung ihrer Identifikationskennung angeregt werden sollen. Übliche induktive und kapazitive Signale haben eine geringe Reichweite, so dass gewährleistet ist, dass Signale, die für einen bestimmten Busteilnehmer vorgesehen sind, von anderen Busteilnehmern nicht fälschlicherweise als für sie vorgesehen interpretiert werden.

In einer Weiterbildung der Erfindung variieren beim Senden mehrerer Signale durch einen oder mehrere Sender die Signale bezüglich Frequenz, Pulslänge, Signaldauer und/oder Signalstärke. Diese Parameter sind von den korrespondierenden Empfängern in den Busteilnehmern einfach zu identifizieren, so dass Rückschlüsse auf die zu vergebende Identifikationskennung mit einem geringen technischen Aufwand auf Seiten der Busteilnehmer möglich sind.

In einer Weiterbildung des Verfahrens weisen das oder die Signale eine festgelegte Form auf, insbesondere mit einer festgelegten Initialisierungsfrequenz. Andere Signale, die diese festgelegte Form nicht aufweisen, werden von den Busteilnehmern nicht zur Ermittlung ihrer jeweiligen Identifikationskennung herangezogen. Hierdurch ist es möglich auszuschließen, dass Signale, die nicht zur Festlegung von Identifikationskennungen gedacht sind, sondern beispielsweise von anderen Sender wie Radiosendern, funkbasierten Computernetzwerken, Funktelefonen oder ähnlichem ausgehen, nicht fälschlicherweise zur Identifikationskennungsvergabe genutzt werden. Im einfachsten Fall kann dies durch eine Startsequenz, beispielsweise in Form eines periodischen Rechtecksignals vorgegebener Frequenz, erzielt werden.

In einer Weiterbildung des Verfahrens wird das Verfahren einmalig im Zuge der Herstellung eines den Datenbus und die Busteilnehmer enthaltenden Geräts durchgeführt. Es wird demnach nur eine einmalige Prägung des Geräts im Zuge der Herstellung durchgeführt. Die dadurch geprägten Busteilnehmer behalten die dabei festgelegte Identifikationskennung über ihre gesamte Lebensdauer. Vorteilhaft hieran ist vor allem, dass eine in die Vorrichtung integrierte Sendevorrichtung zur wiederkehrenden Neuvergabe von Identifikationskennungen nicht erforderlich ist. Diese einmalige Prägung im Zuge der Herstellung kann durch ein an das herzustellende Gerät angepasstes Werkzeug mit einem oder mehreren Sendern realisiert werden.

In einer anderen Weiterbildung der Erfindung wird das Verfahren wiederholt durchgeführt, insbesondere bei jeder Inbetriebnahme des den Datenbus und die Busteilnehmer enthaltenden Geräts bzw. des Datenbusses. Dies ist vorteilhaft, wenn die Busteilnehmer während der Lebensdauer des Geräts, beispielsweise aufgrund von Verschleiß, ausgetauscht werden müssen. Gerade bei Datenbussystemen mit einer Vielzahl von Datenbuskomponenten, bei denen der Ausfall einzelner Datenbuskomponenten zum Alltag gehört, ist diese Ausbildung des Verfahrens von Vorteil. Die Ersatz-Busteilnehmer müssen bei der Anwendung dieses Verfahrens mit wiederholter Identifikationskennungsvergabe nicht gezielt auf eine vorgegebene Identifikationskennung gesetzt werden, sondern erhalten diese bei der Inbetriebnahme des Datenbusses.

In einer Weiterbildung der Erfindung sind die Busteilnehmer Heizelemente einer Heizeinrichtung, insbesondere Kochstellen bzw. vorteilhaft einzelne Induktionseinrichtungen einer Kochmulde als Gerät. Das der Erfindung zugrundeliegende Problem tritt insbesondere in diesem Bereich deutlich hervor. Bei Kochmulden werden je nach Ausführungsform üblicherweise zwischen vier und sieben Kochstellen, beispielsweise mit Heizstrahlern oder vorteilhaft mit Induktionsheizeinrichtungen ausgestattet, vorgesehen, die auf verschiedene Art und Weise angeordnet sein können. Die Kochstellen sind dabei häufig von gleichem Typ. Um den Kochstellen nicht schon vor Montage in der Kochmulde eine Identifikationskennung zuzuordnen, was den Herstellungsvorgang deutlich verteuern würde, werden die Kochstellen ohne eindeutige Identifikationskennung im Zuge der Herstellung in die Kochmulde integriert und mittels eines Datenbusses verbunden. Erst anschließend erfolgt anhand des erfindungsgemäßen Verfahrens eine Vergabe der Identifikationskennungen, wobei erreicht wird, dass die Identifikationskennungen der einzelnen Kochstellen zwischen verschiedenen Kochmulden gleichen Typs identisch ist. Dies heißt im Ergebnis, dass die Kochstellen jeweils immer die gleichen Identifikationskennungen aufweisen, beispielsweise könnte eine Kochstelle links hinten immer die Identifikationskennung "4" aufweisen, während die davor liegende Kochstelle links vorne immer die Identifikationskennung "3" aufweist. Ein mit dem Datenbus verbundenes Steuergerät, das die Aufteilung der Identifikationskennungen auf die verschiedenen Kochstellen kennt, kann demzufolge Eingaben eines Bedieners, wie beispielsweise "Kochstufe 6 für die Kochstelle links hinten" der korrekten Identifikationskennung "4" zuordnen und mit dieser Identifikationskennung ein entsprechendes Signal auf den Datenbus senden.

Die Erfindung betrifft auch ein Gerät mit mehreren elektronischen Baugruppen als Busteilnehmer, die über einen gemeinsamen Datenbus miteinander verbunden sind, wobei die Baugruppen je einen Signalempfänger zum Empfang drahtlos übermittelter Signale aufweisen. Das Gerät weist mindestens eine Auswerteeinheit auf, die anhand empfangender Signale den Baugruppen eine jeweils eindeutige Identifikationskennung zuweist.

Die Herstellung eines solchen Geräts ist trotz der erforderlichen Signalempfänger und der zugehörigen Logik in Form einer oder mehrerer Auswerteeinheiten vergleichsweise günstig, da es bei der Montage der Baugruppen nicht erforderlich ist, schon bezüglich der Identifikationskennung fertig konfigurierte Baugruppen zu verwenden bzw. diese manuell im montierten Zustand zu konfigurieren. Stattdessen wird das Gerät fertig montiert und erst anschließend im Zuge einer Prägung mit Identifikationskennungen für die Baugruppen versehen. Die mindestens eine Auswertungseinrichtung erlaubt es, anhand der von den Signalempfängern empfangenen Signale bzw. auf Basis von deren Parametem, Rückschlüsse darauf zu ziehen, welche Identifikationskennung einer jeweiligen Baugruppe zuzuordnen ist. Unter Gerät wird in diesem Zusammenhang beispielsweise eine Anordnung mit mehreren an oder in einem einheitlichen Gehäuse untergebrachten Baugruppen verstanden. Gleichermaßen fällt jedoch eine Anordnung verschiedener auch räumlich getrennter Baugruppen wie für den Betrieb an einem Feldbus ausgebildeter Maschinen unter die hier verwendete Definition eines Geräts.

In einer Weiterbildung der Erfindung ist das Gerät eine Kochmulde und die Baugruppen sind zumindest zum Teil Kochstellen dieser Kochmulde. Gerade bei Kochmulden, die in hohen Stückzahlen hergestellt werden, ist die erfindungsgemäße Ausprägung zweckmäßig, da die Kostenerhöhung durch die zusätzlichen Empfänger geringer ist als die im Zuge der Montage auftretenden Kosten durch eine manuelle Konfiguration oder auftretende Fehler.

In einer Weiterbildung der Erfindung ist jeder Baugruppe, insbesondere jeder Kochstelle, eine eigene Auswertungseinrichtung zugeordnet. Dadurch ist es möglich, dass eine jede Baugruppe, noch bevor sie zum ersten Mal auf den Datenbus sendet und gegebenenfalls sogar bevor sie mit dem Datenbus verbunden wird, mit hoher Zuverlässigkeit ihre eigene Identifikationskennung aus den Parametern des empfangenen Signals schließen kann.

Die Erfindung betrifft auch eine Vorrichtung zur Vergabe von Identifikationskennungen an Busteilnehmer eines Geräts, das mit einem Datenbus ausgestattet ist, mit dem die Busteilnehmer verbunden sind, insbesondere zur Vergabe von Identifikationskennungen an eine fertig montierte Kochmulde mit mehreren Kochstellen. Die Vorrichtung weist zur Vergabe von Identifikationskennungen eine Aufnahme für das Gerät und mehrere Sender auf zur Ausstrahlung von drahtlosen Signalen, anhand derer ein Busteilnehmer oder mehrere Busteilnehmer ihre jeweilige Identifikationskennung ermitteln können.

Das Gerät, dessen Busteilnehmer mit Identifikationskennungen versehen werden sollen, wird in der Aufnahme aufgenommen, so dass die relativ zum Gerät bezüglich ihrer Position festgelegten Busteilnehmer auch relativ zur Vorrichtung zur Vergabe von Identifikationskennungen in einer definierten Position ruhen. Anschließend werden von den Sendern eines oder mehrere Signale ausgestrahlt, die jeweils für einen einzelnen oder mehrere Busteilnehmern bestimmt sind und die zur Ermittlung der jeweiligen Identifikationskennungen der Busteilnehmer herangezogen werden können.

Diese und weitere Merkmale der Erfindung finden sich außer in den Ansprüchen auch in der Beschreibung und in den Zeichnungen, wobei die einzelnen Merkmale jeweils für sich allein oder zu mehreren in Form von Unterkombinationen bei einer Ausführungsform der Erfindung und auf anderen Gebieten verwirklicht sein und vorteilhaft sowie für sich schutzfähige Ausführungen darstellen können, für die hier Schutz beansprucht wird. Die Unterteilung der Anmeldung in Zwischenüberschriften und einzelne Abschnitte beschränkt die unter diesen gemachten Ausführungen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Ausführungsform eines als Kochmulde ausgebildeten Geräts in einer teilweise geschnittenen Ansicht, das nicht zur beanspruchten Erfindung gehört,
- Fig. 2: die Durchführung eines Verfahrens mit der in Fig. 1 dargestellten Kochmulde,
- Fig. 3: eine Darstellung der Signalverläufe des von einem Sender ausgestrahlten Signals sowie der von kochstelleneigenen Empfängern der Kochmulde gemäß der Fig. 1 und 2 empfangenen Signale,
- Fig. 4: eine weitere Ausführungsform eines als Kochmulde ausgebildeten erfidungsgemäßen Geräts in einer ebenfalls geschnittenen Ansicht, das nicht zur beanspruchten Erfindung gehört,
- Fig. 5: ein Verfahren zur Anwendung auf die in Fig. 4 dargestellte Kochmulde,
- Fig. 6: eine Darstellung der Signalverläufe des durch einen Sender ausgestrahlten Signals bei der Anwendung der Variante des Verfahrens gemäß Fig. 5 sowie der durch kochstelleneigene Empfänger empfangenen Signale, Fig. 7 eine Ausführungsform einer erfindungsgemäßen Vorrichtung zur Vergabe von Identifikationskennungen an ein mit einem Datenbus und Busteilnehmern ausgestattetes Gerät und
- Fig. 8: eine weitere Ausführungsform einer Vorrichtung zur Vergabe von Identifikationskennungen an ein mit einem Datenbus und Busteilnehmern ausgestattetes Gerät, die nicht zur beanspruchten Erfindung gehört

### Detaillierte Beschreibung der Ausführungsbeispiele

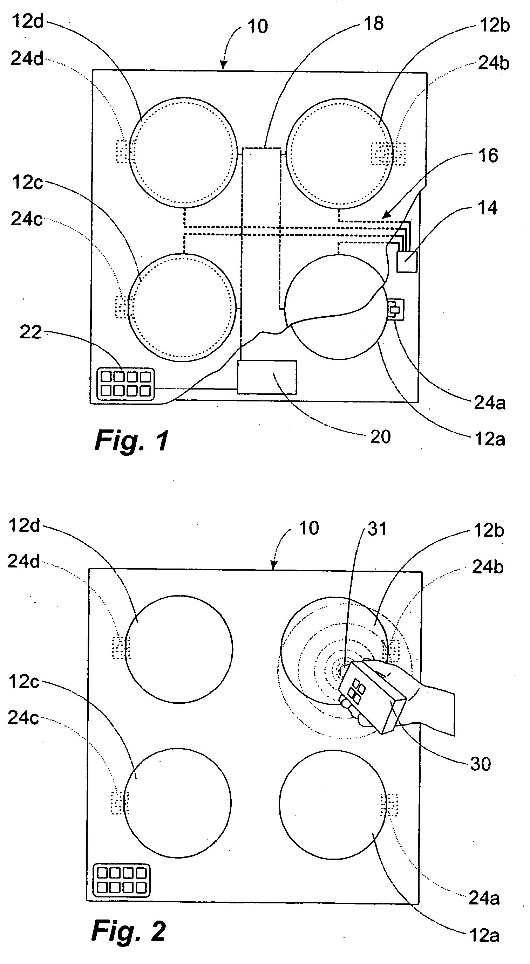

Die Fig. 1 und 2 zeigen eine Kochmulde 10 mit vier als Heizstrahler ausgebildete Kochstellen 12a-d. Die Kochmulde 10 ist in an sich herkömmlicher Art und Weise mit einem Leistungsanschluss 14 ausgestattet, von dem aus sternförmig Leitungen 16 zu den einzelnen Kochstellen 12a-d geführt sind. Über diesen Leistungsanschluss 14 und die Leitungen 16 erhalten die Kochstellen 12 die für den Heizbetrieb erforderliche Energie. Darüber hinaus weist die Kochmulde 10 in ebenfalls herkömmlicher Art und Weise einen Datenbus 18 auf, der die einzelnen Kochstellen 12a-d miteinander verbindet. Zur Kommunikation mit dem Datenbus 18 weist jede der Kochstellen 12a-d ein in den Fig. 1 und 2 nicht dargestelltes Steuergerät mit Buscontroller auf, welcher als Busteilnehmer mit dem Datenbus 18 verbunden ist. Der Datenbus 18 ist darüber hinaus mit einem Zentralsteuergerät 20 verbunden, welches darüber hinaus mit einem Tastenfeld 22 verbunden ist, über das ein Bediener Steueranweisungen erteilen kann.

Abweichend von herkömmlichen Kochmulden weist die in Fig. 1 dargestellte Kochmulde je Kochstelle 12a-d ein Empfängermodul 24-d auf, wobei jedes Empfängermodul 24 unmittelbar einer Kochstelle 12a-d zugeordnet ist und örtlich in deren unmittelbarer Nähe angeordnet ist. Die Empfängermodule 24a-d sind in nicht dargestellter Art und Weise mit dem jeweiligen Steuergerät der Kochstellen 12a-d verbunden, welche darüber hinaus jeweils einen Speicher aufweisen, der der Aufnahme einer eindeutigen und für die jeweilige Kochstelle spezifischen Identifikationskennung dient.

Der in Fig. 1 dargestellte Zustand ist der Zustand nach der Montage und vor der ersten Inbetriebnahme der Kochmulde 10. Den Kochstellen 12a-d ist zu diesem Zeitpunkt jeweils noch keine Identifikationskennung zugewiesen. Die Kochstellen 12 sind einander noch vollständig identisch und ein spezifisches Ansprechen einer einzelnen Kochstelle 12a-d über das Zentralsteuergerät 20 ist demzufolge nicht möglich.

Fig. 2 zeigt die Vergabe von Identifikationskennung nach der Montage der Kochmulde 10. Diese Vergabe wird über ein Handsendegerät 30 realisiert, welches im Zuge der Überprüfung der fertigen Kochmulde 10 nacheinander jeweils über einer Kochstelle 12a-d in einen Sendemodus versetzt wird, in dem es ein Signal 31 sendet, in welches die für die jeweilige Kochstelle vorgesehene Identifikationskennung codiert ist. Die zu sendende Identifikationskennung kann am Handsendegerät 30 eingestellt werden. Die jeweiligen Empfänger 24a-d der Kochstellen 12a-d empfangen dieses ausgestrahlte Signal 31 des Senders 30 und prüfen in Reaktion auf den Empfang, ob das Signal 31 eine gegebene Grenzsignalstärke überschritten hat. Wenn diese Grenzsignalstärke überschritten wurde, so wird vom Steuergerät der jeweiligen Kochstelle 12 das Signal als für die betreffende Kochstelle bestimmt interpretiert. Sollte das Steuergerät einer der Kochstellen 12a-d zu dem Ergebnis kommen, dass das Signal 31 für die ihm zugeordnete Kochstelle bestimmt ist, so analysiert es das Signal im Hinblick auf die darin codierte Identifikationskennung und schreibt diese anschließend in den dem Steuergerät zugeordneten Speicher.

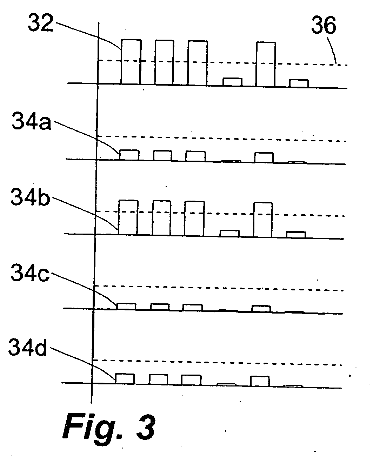

Fig. 3 zeigt den Signalverlauf 32 des vom Sender 30 ausgestrahlten Signals 31 sowie die Signalverläufe 34a-d der von den Empfängern 24a-d empfangenen Signale. Darüber hinaus ist in Fig. 3 gestrichelt der Signalstärkengrenzwert 36 eingezeichnet, unterhalb dessen Signale vom jeweiligen Steuergerät der Kochstellen 12a-d als nicht an die jeweilige Kochstelle 12 gerichtet interpretiert werden.

Wie der Signalverlauf 32 des Signals 31 zeigt, beginnt das vom Sender 30 abgestrahlte Signal 31 mit drei Rechteck-Peaks, die unabhängig von der jeweils codierten Identifikationskennung sind. Diese drei Peaks dienen zum einen den Empfängern bzw. den Steuergeräten der Kochstellen 12a-d dazu, zu erkennen, ob es sich beim empfangenen Signal um ein Signal zur Einstellung der Identifikationskennung handelt. Darüber hinaus dienen sie dem Zweck, dass anhand ihrer Signalstärke von den Steuergeräten der Einzelkochstellen 12a-d beurteilt werden kann, ob das Signal stark genug für eine Auswertung ist. Die Signalverläufe 34a-d des empfangenen Signals 31 lassen erkennen, dass in Abhängigkeit der Distanz der Empfänger vom Sender die Signalstärke deutlich variiert. Die Signalverläufe 34a, 34c, 34d, die von den Empfängern 24a, 24c, 24d empfangen wurden, überschreiten die Grenzsignalstärke 36 jeweils nicht. Einzig der durch den Empfänger 24b der Kochstelle 12b empfangene Signalverlauf 36b überschreitet mit seinen drei einleitenden Peaks die Grenzsignalstärke 36. Dies ist für das Steuergerät der Kochstelle 24b der Hinweis darauf, dass die nachfolgend codierte Identifikationskennung für die Kochstelle 12b bestimmt ist. Während die Steuergeräte der Kochstellen 12a, 12c, 12d eine nähere Analyse des nachfolgenden Teils des Signalverlaufs nicht mehr durchführen, wird dieser Teil vom Steuergerät der Kochstelle 12b analysiert und es wird erkannt, dass es sich um die Bitfolge "Low - High - Low" handelt. Diese Bitfolge wird vom Steuergerät daraufhin in den zugeordneten Speicher geschrieben. Die Bitfolge "Low - High - Low" entspricht der binären Codierung der Identifikationskennung "2". Die Kochstelle 12b erhält demnach die Identifikationskennung "2".

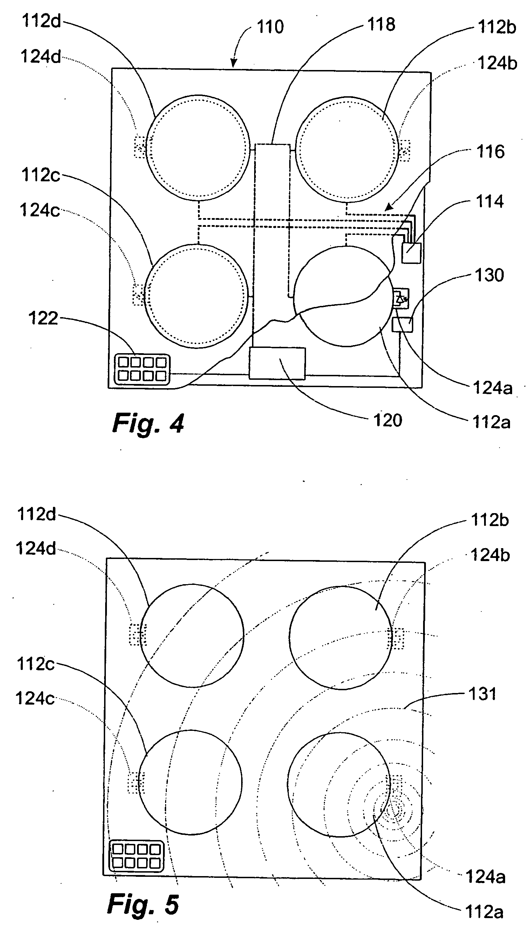

Fig. 4 und 5 zeigen eine weitere Ausführungsform einer Kochmulde, die zur Durchführung eines Verfahrens zur Vergabe eindeutiger Identifikationskennungen vorbereitet ist.

Wie auch die in den Fig. 1 und 2 dargestellte Kochmulde 10 weist diese in den Fig. 4 und 5 dargestellte Kochmulde 110 vier Kochstellen 112a-d auf, die einerseits mit einem Leistungsanschluss 114 sternförmig und andererseits mit einem Zentralsteuergerät 120 über einen Datenbus 118 verbunden sind. Wie auch die in den Fig. 1 und 2 dargestellten Kochstellen 12 weisen die in den Fig. 4 und 5 dargestellten Kochstellen 112a-d jeweils einen Empfänger 124a-d auf sowie jeweils ein in den Fig. 4 und 5 nicht dargestelltes Steuergerät mit einem für die Identifikationskennung der jeweiligen Kochstelle 112a-d vorgesehenen Speicher. Abweichend von der ersten Ausführungsform, die in den Fig. 1 und 2 dargestellt ist, weist die in den Fig. 4 und 5 dargestellte Kochmulde 110 einen integrierten Sender 130 auf, der unmittelbar mit dem Zentralsteuergerät 120 verbunden ist.

Die Fig. 4 zeigt die Kochmulde 110 im fertig montierten Zustand, wobei den Kochstellen jeweils noch keine Identifikationskennung zugewiesen ist. Anders als bei der ersten Ausführungsform.der Fig. 1 und 2 wird dies auch nicht mittels einer permanenten Festlegung im Zuge der Herstellung gemacht, sondern die Kochmulde 110 ist selbst dafür ausgelegt, bei jeder Inbetriebnahme erneut die Identifikationskennungen zu vergeben.

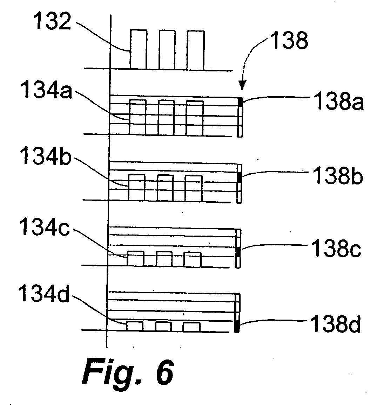

Wie dies geschieht zeigen die Fig. 5 und 6. Nach Einschalten der Kochmulde 110 veranlasst das Zentralsteuergerät 120 den Sender 130, ein Signal 131 abzustrahlen. Dieses Signal 131 wird von den Empfängern 124a-d empfangen und in verschiedener Art und Weise interpretiert.

Fig. 6 zeigt den Signalverlauf 132 des vom Sender 130 ausgestrahlten Signals 131. Es handelt sich um ein Rechtecksignal mit insgesamt drei aufeinanderfolgenden Signalpeaks. Die Signalverläufe 134a-d zeigen die Signalverläufe, die von den Empfängern 124a-d der Kochstellen 112a-d empfangen werden. Infolge der unterschiedlichen Distanz der Empfänger 124 vom Sender 130 sind die Signale in unterschiedlichem Maße gedämpft. Während der vom Empfänger 124a registrierte Signalverlauf 134a noch annähernd die Signalstärke des Ausgangssignals 132 erreicht, da der Empfänger 124a unmittelbar neben dem Sender 130 angeordnet ist, weisen die Signale, die von den Empfängern 124b-d empfangen werden, schon deutlich gedämpftere Signalverläufe auf. Abweichend von dem Verfahren, welches in Bezug auf die Kochmulde 10 der Fig. 1 und 2 angewendet wurde, sind die Steuergeräte der Kochmulde 110 darauf ausgerichtet, das Signal 131 in jedem Fall und unabhängig von seiner Signalstärke zur Ermittlung einer Identifikationskennung heranzuziehen, sofern es sich, wie im vorliegenden Fall, um ein Rechtecksignal 131 mit drei Signalpeaks handelt. Die Steuergeräte der Kochstellen 112ad verfügen jeweils über eine Tabelle, in der verschiedenen Signalstärkebereichen jeweils eine spezifische Identifikationskennung zugeordnet ist. Nachdem das Signal 131 von den Empfängern 124a-d empfangen wurde, wird von den Steuergeräten der Kochstellen ermittelt, in welchem der jeweiligen Signalstärkebereiche die empfangene Signalstärke angesiedelt ist. In der Fig. 6 ist die Bereichsunterteilung der jeweils rechts der empfangenen Signale dargestellten Bereichsskala 138 zu entnehmen. Es ist zu erkennen, dass die Signalstärke, die vom Empfänger 124a ermittelt wurde, im obersten Bereich 138a dieser Skala liegt. Das Steuergerät der Kochstelle 112a schreibt daher die diesem obersten Bereich 138a zugeordnete Identifikationskennung "1" in seinen Speicher. In gleicher Art und Weise verfahren die Steuergeräte der Kochstellen 112b-d, wobei die Kochstelle 112b die Identifikationskennung "2", die dem zweiten Bereich 138b zugeordnet ist, die Kochstelle 112c die Identifikationskennung "3", die dem dritten Bereich 138c zugeordnet ist, und die Kochstelle 112d die Identifikationskennung "4", die dem vierten Bereich 138d zugeordnet ist, erhält.

Bei dieser zweiten Variante des Verfahrens ist es demnach möglich, mit nur einem Signal die Vergabe von Identifikationskennungen an alle Kochstellen zu bewirken.

In einer nicht dargestellten Variante dieses im Zusammenhang mit den Fig. 4 bis 6 dargestellten Verfahrens ermittelt das jeweilige Steuergerät der Kochstellen die Identifikationskennung nicht anhand einer Tabelle mit Signalstärkebereichen, sondern indem die empfangene Signalstärke auf den Datenbus geschrieben wird, während gleichzeitig vom Datenbus gelesen wird. Auf diese Art und Weise erfahren die Steuergeräte aller Kochstellen, welche Signalstärken von den anderen Empfängern registriert wurden. Anschließend können sie die Identifikationskennung dadurch ermitteln, dass die eigene empfangene Signalstärke in Relation zu den anderen empfangenen Signalstärken genutzt wird, so dass z.B. die Kochstelle mit der zweithöchsten Signalstärke die Identifikationskennung "2" erhält.

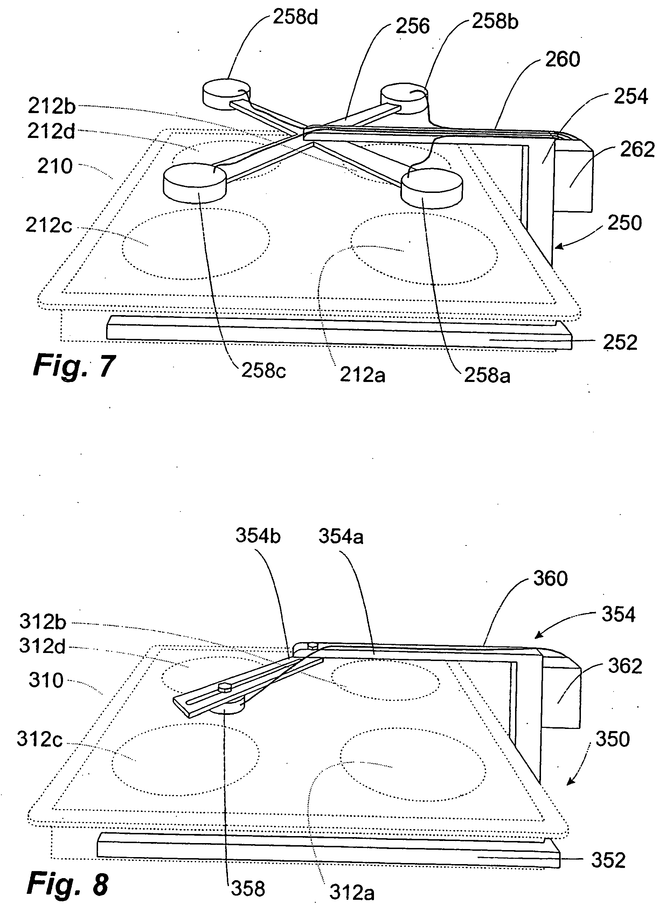

Die Fig. 7 und 8 zeigen zwei Ausführungsformen von Vorrichtungen zur Vergabe von Identifikationskennungen an mit einem Datenbus und am Datenbus angeschlossenen Busteilnehmern ausgestatteten Geräten.

Die in Fig. 7 dargestellte erfindungsgemäße Vorrichtung dient der Vergabe von Identifikationskennungen an Kochmulden ähnlich Fig. 1 und 2. Die Vorrichtung 250 weist eine Aufnahme 252 auf, in die eine entsprechende Kochmulde 210 eingelegt ist. An einem Auslegerarm 254 der Vorrichtung 250 erstreckt sich eine Sendevorrichtung 256 über die Oberseite der Kochmulde 210. Diese Sendevorrichtung 256 verfügt über insgesamt vier Sender 258a, 258b, 258c, 258d, die über Kabelverbindungen 212 jeweils separat mit einem Steuergerät 214 verbunden sind. Die Sender 258a-d sind so angeordnet, dass sie sich jeweils oberhalb einer der Kochstellen 212a-d der eingespannten Kochmulde 210 befinden.

Die Funktionsweise dieser Vorrichtung entspricht weitgehend der im Zusammenhang mit Fig. 2 erläuterten Vergabe von Identifikationskennungen. Die Sender 258a-d senden jeweils ein für die Kochstellen 212a-d der Kochmulde 210 spezifisches Signal, welches lediglich von jener Kochstelle in ausreichender Stärke wahrgenommen wird, für die es bestimmt ist. Auf diese Art und Weise ist es mit der Vorrichtung 250 möglich, alle vier Kochstellen 212a-d der Kochmulde 210 gleichzeitig mit jeweils einer Identifikationskennung zu versehen.

Die Fig. 8 zeigt eine weitere Ausführungsform einer Vorrichtung zur Vergabe von Identifikationskennungen an ein Gerät mit einem Datenbus und am Datenbus angeschlossenen Busteilnehmern. Diese Vorrichtung 350 verfügt wie die in Fig. 7 dargestellte Vorrichtung über eine Aufnahme 352 und eine an einem Auslegerarm 354 angeordnete Sendeeinrichtung. Diese weist abweichend von der Ausführungsform der Fig. 7 jedoch lediglich einen Sender 358 auf. Dieser Sender 358 ist bezüglich seiner relativen Position zu einer eingespannten Kochmulde 310 flexibel. Zu diesem Zweck ist der Sender 358 an einem vorderen Abschnitt 354a des Auslegerarms 354 angebracht, welcher gegenüber einem vorrichtungsfesten hinteren Abschnitt 354b des Auslegerarms 354 bzgl. der Winkelstellung bewegbar ist. Darüber hinaus ist die Position des Senders 358 in der Erstreckungsachse des vorderen Abschnitts 354a durch eine Arretierschraube einstellbar. Der Sender 358 kann dadurch in einer beliebigen Stellung über der Aufnahme 310 festgelegt werden.

Die Vorrichtung 350 gestattet die Durchführung eines Verfahrens zur Vergabe eindeutiger Identifikationskennungen, welches dem zu den Fig. 4 bis 6 erläuterten Verfahren ähnelt. Abweichend von diesem ist der Sender 358 jedoch nicht Teil der Kochmulde und die von den Steuergeräten der Kochstellen ermittelten Identifikationskennungen werden permanent gespeichert.

In einer nicht dargestellten weiteren Ausführungsform einer Vorrichtung zur Vergabe von Identifikationskennungen ist ebenfalls nur ein einziger Sender vorgesehen, wobei dieser jedoch in automatisierter Art und Weise bewegt werden kann, so dass es möglich ist, die einzelnen Kochstellen einer Kochmulde gemäß der ersten Ausführungsform der Fig. 1 und 2 nacheinander mit einer Identifikationskennung zu versehen. Der Vorteil einer solchen Ausführungsform liegt insbesondere in dem hohen Maß an Flexibilität.

## Patentansprüche

1. Verfahren zur Vergabe von Identifikationskennungen an Busteilnehmer (212a-d) eines Datenbusses (18; 118), wobei
- ein ortsabhängig drahtlos empfangbares Signal (31; 131) mittels eines Senders (258a-d) ausgestrahlt wird,
- der Busteilnehmer das Signal (31; 131) empfängt und
- dem Busteilnehmer in Abhängigkeit des empfangenen Signals (34a-d; 134a-d) seine Identifikationskennung zugewiesen wird,
wobei die Identifikationskennung in das ausgesendete Signal (31; 131) kodiert ist, wobei für mehrere Busteilnehmer (212a-d) nacheinander oder gleichzeitig jeweils ein Signal (31) durch mehrere Sender (258a-d) ausgestrahlt wird, wobei die Busteilnehmer so weit voneinander beabstandet sind, dass jeder Busteilnehmer jeweils nur das ihm zugeordnete Signal zur Ermittlung seiner Identifikationskennung heranzieht,
**dadurch gekennzeichnet, dass** je Busteilnehmer (212a-d) ein Sender (258a-d) verwendet wird, wobei die Sender (258a-d) kongruent zu den Busteilnehmern angeordnet sind.

2. Verfahren nach Anspruch 1, **dadurch gekennzeichnet, dass** der Busteilnehmer (212a-d) nach Ermittelung seiner Identifikationskennung die Identifikationskennung in einem Speicher ablegt.

3. Verfahren nach Anspruch 1 oder 2, **dadurch gekennzeichnet, dass** der Busteilnehmer (212a-d) das empfangene Signal nur dann zur Ermittlung seiner Identifikationskennung nutzt, wenn die Signalstärke (34a-d) des Signals einen festgesetzten Grenzwert (36) übersteigt.

4. Verfahren nach Anspruch 1, **dadurch gekennzeichnet, dass** die Busteilnehmer während der Vergabe bzw. Ermittlung von Identifikationskennungen mit dem Datenbus verbunden sind und eine Datenbuskommunikation zum Zweck der Kommunikation, Über-wachung und/oder Plausibilitätsprüfung der Vergabe bzw. Ermittlung stattfindet.

5. Verfahren nach einem der vorstehenden Ansprüche, **dadurch gekennzeichnet, dass** die Sender elektromagnetische Signale senden.

6. Verfahren nach einem der vorstehenden Ansprüche, **dadurch gekennzeichnet, dass** beim Senden mehrerer Signale (31) durch mehrere Sender (258a-d) die Signale bezüglich Frequenz, Pulslänge, Signaldauer und/oder Signalstärke variieren.

7. Verfahren nach einem der vorstehenden Ansprüche, **dadurch gekennzeichnet, dass** das Signal (31, 131) oder die Signale eine festgelegte Form aufweisen, wobei andere Signale ohne diese festgelegte Form von den Busteilnehmer (212a-d) nicht zur Ermittlung ihrer jeweiligen Identifikationskennung herangezogen werden.

8. Verfahren nach Anspruch 7, **dadurch gekennzeichnet, dass** das Signal (31, 131) oder die Signale mit einer festgelegten Initialisierungssequenz beginnen.

9. Verfahren nach einem der vorstehenden Ansprüche, **dadurch gekennzeichnet, dass** das Verfahren einmalig im Zuge der Herstellung eines den Datenbus und die Busteilnehmer enthaltenden Geräts (210) durchgeführt wird.

10. Verfahren nach einem der Ansprüche 1 bis 8, **dadurch gekennzeichnet, dass** das Verfahren wiederholt durchgeführt wird.

11. Verfahren nach Anspruch 10, **dadurch gekennzeichnet, dass** das Verfahren bei jeder Inbetriebnahme des den Datenbus und die Busteilnehmer enthaltenden Geräts (110) bzw. des Datenbusses (118).

12. Vorrichtung (250) zur Vergabe von Identifikationskennungen an ein Gerät (210), das mit einem Datenbus und am Datenbus angeschlossenen Busteilnehmern (212a-d) ausgestattet ist zur Vergabe von Identifikationskennungen an eine fertig montierte Kochmulde mit mehreren Kochstellen, mit einer Aufnahme (252) für das Gerät (210) und mehreren Sendern (258a-d) zur Ausstrahlung von drahtlosen Signalen, anhand derer mehrere Busteilnehmer ihre jeweilige Identifikationskennung ermitteln, **dadurch gekennzeichnet, dass** jedem Busteilnehmer (212a-d) ein eigener Sender (258a-d) zugeordnet ist, wobei die Sender so ausgebildet und angeordnet sind, dass ein von ihnen ausgestrahltes Signal jeweils nur einen Busteilnehmer erreicht.

13. Vorrichtung nach Anspruch 12, **dadurch gekennzeichnet, dass** die Vorrichtung ein Steuergerät aufweist, welches mit dem Datenbus verbindbar ist.

## Claims

1. A method for allocating identification tags to bus subscribers (212a-d) of a data bus (18; 118), wherein
- a position-dependent, wireless receivable signal (31; 131) is emitted by means of a transmitter (258a-d),
- the bus subscriber receives the signal (31; 131), and
- as a function of the received signal (34a-d; 134a-d) the identification tag is allocated to the bus subscriber,
wherein the identification tag is coded in the emitted signal (31; 131), wherein for a plurality of bus subscribers (212a-d) successively or simultaneously in each case one signal (31) is emitted by a plurality of transmitters (258a-d), the bus subscribers being spaced so far apart from one another that each bus subscriber only uses the signal allocated to it for determining its identification tag,
**characterized in that**
for each bus subscriber (212a-d) one transmitter (258a-d) is used, with the transmitters (258a-d) being positioned in congruent manner to the bus subscribers.

2. The method according to claim 1, **characterized in that** after determining its identification tag, the bus subscriber (212a-d) files the identification tag in a memory.

3. The method according to claim 1 or 2, **characterized in that** the bus subscriber (212a-d) uses the received signal for determining its identification tag only when the signal strength (34a-d) of the signal exceeds a fixed limit value (36).

4. The method according to claim 1, **characterized in that** during the allocation or determination of identification tags the bus subscribers are connected to the data bus and there is a data bus communication for communication, monitoring and/or plausibility checking of the allocation or determination.

5. The method according to any one of the preceding claims, **characterized in that** the transmitters transmit electromagnetic signals.

6. The method according to any one of the preceding claims, **characterized in that** on transmitting multiple signals (31) through multiple transmitters (258a-d), the signals vary as regards frequency, pulse length, signal duration and/or signal strength.

7. The method according to any one of the preceding claims, **characterized in that** the signal (31; 131) or the signals have a fixed form, and other signals not having this fixed form are not used by the bus subscribers (212a-d) for determining their particular identification tag.

8. The method according to claim 7, **characterized in that** the signal (31; 131) or the signals begin with a fixed initializing sequence.

9. The method according to any one of the preceding claims, **characterized in that** the method is performed once during the manufacture of a device (210) containing the data bus and bus subscribers.

10. The method according to any one of the claims 1 to 8, **characterized in that** the method is performed repeatedly.

11. The method according to claim 10, **characterized in that** the method is performed on each putting into operation of the device (110) containing the data bus and the bus subscribers or of the data bus (118).

12. An apparatus (250) for allocating identification tags to a device (210), which device is equipped with a data bus and bus subscribers (212a-d) connected to the data bus for allocating identification tags to a finished assembled hob with several hotplates, including a receptacle (252) for the device (210) and a plurality of transmitters (258a-d) for emitting wireless signals, by means of the signals multiple bus subscribers determine their particular identification tags, **characterized in that** each bus subscriber (212a-d) is assigned a distinct transmitter (258a-d), with the transmitters being configured and arranged such that a signal emitted by the transmitters in each case reaches only one bus subscriber.

13. The apparatus according to claim 12, **characterized in that** the apparatus includes a control unit which is connectable to the data bus.

## Revendications

1. Procédé pour attribuer des codes d'identification à des abonnés de bus (212a-d) d'un bus de données (18 ; 118), selon lequel
- un signal (31 ; 131) pouvant être reçu sans fil en fonction du site est émis au moyen d'un émetteur (258a-d),
- l'abonné de bus reçoit le signal (31 ; 131) et
- l'abonné de bus se voit attribuer son code d'identification en fonction du signal reçu (34a-d ; 134a-d),
le code d'identification étant codé dans le signal émis (31 ; 131), un signal (31) étant à chaque fois émis successivement ou simultanément par plusieurs émetteurs (258a-d) pour plusieurs abonnés de bus (212a-d), les abonnés de bus étant espacés les uns des autres de telle sorte que chaque abonné de bus n'utilise à chaque fois que le signal qui lui est attribué pour déterminer son code d'identification,
**caractérisé en ce qu'**un émetteur (258a-d) est utilisé pour chaque abonné de bus (212a-d), les émetteurs (258a-d) étant disposés de manière congruente par rapport aux abonnés de bus.

2. Procédé selon la revendication 1, **caractérisé en ce que** l'abonné de bus (212a-d) dépose le code d'identification dans une mémoire après la détermination de son code d'identification.

3. Procédé selon la revendication 1 ou 2, **caractérisé en ce que** l'abonné de bus (212a-d) n'utilise le signal reçu pour déterminer son code d'identification que lorsque l'intensité de signal (34a-d) du signal dépasse une valeur limite (36) définie.

4. Procédé selon la revendication 1, **caractérisé en ce que** les abonnés de bus sont reliés avec le bus de données pendant l'attribution ou la détermination des codes d'identification et une communication de bus de données a lieu dans un but de communication, de surveillance et/ou de contrôle de plausibilité de l'attribution ou de la détermination.

5. Procédé selon l'une des revendications précédentes, **caractérisé en ce que** les émetteurs émettent des signaux électromagnétiques.

6. Procédé selon l'une des revendications précédentes, **caractérisé en ce que** lors de l'émission de plusieurs signaux (31) par plusieurs émetteurs (258a-d), les signaux varient du point de vue de la fréquence, de la durée d'impulsion, de la durée du signal et/ou de l'intensité du signal.

7. Procédé selon l'une des revendications précédentes, **caractérisé en ce que** le signal (31, 131) ou les signaux présentent une forme définie, les autres signaux n'ayant pas cette forme définie n'étant pas utilisés par les abonnés de bus (212a-d) pour la détermination de leur code d'identification correspondant.

8. Procédé selon la revendication 7, **caractérisé en ce que** le signal (31, 131) ou les signaux commencent par une séquence d'initialisation définie.

9. Procédé selon l'une des revendications précédentes, **caractérisé en ce que** le procédé est exécuté une fois dans le cadre de la fabrication d'un appareil (210) contenant le bus de données et les abonnés de bus.

10. Procédé selon l'une des revendications 1 à 8, **caractérisé en ce que** le procédé est exécuté de manière répétitive.

11. Procédé selon la revendication 10, **caractérisé en ce que** le procédé est exécuté à chaque mise en service de l'appareil (110) qui contient le bus de données et les abonnés de bus ou du bus de données (118).

12. Dispositif (250) pour attribuer des codes d'identification à un appareil (210), lequel est équipé d'un bus de données et d'abonnés de bus (212a-d) connectés au bus de données, pour attribuer des codes d'identification à une plaque de cuisson entièrement montée comprenant plusieurs points de cuisson, comprenant un logement (252) pour l'appareil (210) et plusieurs émetteurs (258a-d) pour émettre des signaux sans fil à l'aide desquels plusieurs abonnés de bus déterminent leur code d'identification correspondant, **caractérisé en ce qu'**un émetteur (258a-d) propre est affecté à chaque abonné de bus (212a-d), les émetteurs étant configurés et disposés de telle sorte qu'un signal qu'ils émettent n'atteint à chaque fois qu'un seul abonné de bus.

13. Dispositif selon la revendication 12, **caractérisé en ce que** le dispositif présente un contrôleur qui peut être connecté au bus de données.
